# FASCICULE DE BREVET EUROPEEN

(11) **EP 4 139 126 B1**
(45) Date de publication et mention de la délivrance du brevet: **04.06.2025**
(21) Numéro de dépôt: 21731221.4
(22) Date de dépôt: 23.04.2021
(51) Int. Cl.: B32B 15/08, B32B 27/08, B32B 27/28, B32B 27/32

(54) **MATELAS MULTICOUCHES THERMIQUEMENT ISOLANT**
WÄRMEISOLIERENDE MEHRSCHICHTIGE MATRATZE
HEAT-INSULATING MULTI-LAYER MATTRESS

(30) Priorité: 23.04.2020 FR 2004064
(43) Date de publication de la demande: 01.03.2023
(73) Titulaire: Airbus Defence and Space SAS, 31402 Toulouse Cedex 4 (FR)
(72) Inventeur: MENA, Fabrice, 31402 TOULOUSE Cedex 4 (FR); BEAUFUMÉ, Eric, 31402 TOULOUSE Cedex 4 (FR); VAN DEN BERG, Arthur, 31402 TOULOUSE Cedex 4 (FR); CLAVIÈRES, Philippe, 31402 TOULOUSE Cedex 4 (FR); SODE, Marion, 31402 TOULOUSE Cedex 4 (FR)
(74) Mandataire: Plasseraud IP
(86) Numéro de dépôt international: PCT/FR2021/050706
(87) Numéro de publication internationale: WO 2021/214416

(56) Documents cités:
- FR-A1- 2 948 638
- US-A- 4 008 348
- US-B1- 7 252 890

## Description

### Domaine technique

La présente demande concerne un matelas multicouches thermiquement isolant pour engin spatial, également appelé MLI de l'anglais « Multi Layer Insulation », et un procédé de protection thermique d'un engin spatial à l'aide de tel matelas.

### Technique antérieure

Les matelas multicouches de type MLI sont classiquement utilisés pour assurer l'isolation thermique de certaines parties d'un engin spatial tel qu'un satellite ou une sonde spatiale. Ces matelas sont fixés sur les parois externes à protéger de manière à s'interposer entre l'engin spatial et l'espace, et ainsi bloquer les rayonnements incidents.

Pour assurer une isolation thermique, les matelas classiquement utilisés comprennent un empilement de couches thermiquement isolantes, par exemple formées en polyimide ou Kapton (nom commercial).

De plus, ces matelas comprennent une couche externe dont la composition est généralement adaptée en fonction des contraintes d'utilisation en opération de l'engin spatial, et notamment en fonction des contraintes liées à l'altitude à laquelle il opère.

Pour les engins spatiaux tels que des satellites destinés à opérer en orbite terrestre basse, également nommée par l'acronyme anglais LEO pour « Low Earth Orbit », et qui correspond à des altitudes de l'ordre de 450 km à 2000 km d'altitude, la couche externe d'un matelas multicouche a pour fonction principale de protéger l'empilement de couches thermiquement isolantes du matelas contre l'oxygène atomique, fortement corrosif.

Pour cela, il est connu d'utiliser une couche externe formée en un matériau appelé tissu bêta ou Betacloth, qui est un tissu de fibre de verre enduit de polytétrafluoroéthylène PTFE, plus connu sous sa dénomination commerciale de Teflon.

Le tissu bêta assure le rôle de protection contre l'oxygène atomique, tandis que l'empilement des couches thermiquement isolantes disposées sous la couche externe assure la protection thermique.

Cette structure de matelas utilisant le betacloth n'est cependant pas exempte de défauts. Notamment, elle est très coûteuse car le tissu bêta est luimême couteux, et de plus il est difficile à manipuler pour une utilisation de revêtement de satellite. En effet, le tissu beta est relativement rigide, ce qui cause parfois, lors de sa manipulation, l'apparition de craquelures qui rendent le matelas inopérant et non réparable, il faut alors le remplacer.

De plus, un matelas équipé d'une couche externe en tissu bêta doit être cousu manuellement pour empêcher la formation d'interstices, car la présence de Teflon empêche l'utilisation traditionnelle de ruban adhésif pour solidariser des pièces adjacentes de matelas entre elles. Cette couture manuelle accroît encore le coût de fabrication et d'installation du matelas, mais aussi le risque de l'endommager par des manipulations.

Par ailleurs, le tissu beta présente une absorptivité importante de l'ordre de 50%, ce qui l'amène à chauffer jusqu'à une température de l'ordre de 80°C quand il est exposé au soleil. Ceci peut être un inconvénient pour le reste de l'engin spatial et notamment pour des surfaces adjacentes de l'engin pouvant recevoir un surcroît de rayonnement Infra Rouge du fait de cet échauffement.

Le document US7252890B1 donne un exemple d'un matelas multicouche thermiquement isolant pour un engin spatial.

### Résumé

L'invention a pour but de pallier les inconvénients de l'art antérieur.

En particulier, un but de l'invention est de proposer un matelas de protection thermique pour engin spatial présentant une bonne résistance à l'oxygène atomique, et ne présentant pas les inconvénients du tissu beta décrit ci-avant.

Un autre but de l'invention est de proposer un matelas de protection thermique dont l'installation sur une paroi d'engin spatial est moins coûteuse et plus simple.

Un autre but de l'invention est de proposer un matelas de protection thermique s'échauffant moins lorsqu'il est exposé au soleil.

A cet égard, l'invention propose un matelas multicouches thermiquement isolant pour engin spatial, comprenant :
- un empilement d'une pluralité de couches thermiquement isolantes, et
- une couche externe superposée sur l'empilement,
caractérisé en ce que la couche externe comprend :
- un film de seconde surface miroir SSM, comprenant une couche miroir disposée sous une couche de fluoroéthylène propylène FEP, et
- une couche de polyimide assemblée au film SSM.

Dans des modes de réalisation, la couche de fluoroéthylène propylène FEP présente une épaisseur supérieure à 50 µm.

Dans des modes de réalisation, la couche de polyimide est collée à la couche miroir, du côté de la couche miroir opposé à la couche de FEP.

Dans des modes de réalisation, la couche externe est agencée de sorte que la couche de polyimide soit située du côté de l'empilement de couches thermiquement isolantes. En variante, la couche externe peut être agencée de sorte que le film de seconde surface miroir SSM soit situé du côté de l'empilement de couches thermiquement isolantes.

Dans des modes de réalisation, la couche miroir est métallique et la couche externe comprend au moins une zone dépourvue de polyimide pour permettre la mise à la masse de la couche miroir.

Dans des modes de réalisation, les couches de l'empilement sont formées en polyimide comportant un revêtement métallique.

La présente porte également sur un engin spatial, comprenant une protection thermique rapportée sur ses parois, caractérisé en ce que la protection thermique est formée du matelas thermiquement isolant selon la description qui précède.

Dans des modes de réalisation, la protection thermique de l'engin spatial est formée :
- sur au moins une paroi de l'engin spatial, du matelas dans lequel la couche externe est agencée de sorte que la couche de polyimide soit située du côté de l'empilement de couches thermiquement isolantes, et que la couche de seconde surface miroir SSM soit la surface exposée du matelas, et
- sur au moins une autre paroi de l'engin spatial, du matelas dans lequel la couche externe est agencée de sorte que le film de seconde surface miroir SSM soit situé du côté de l'empilement de couches thermiquement isolantes, et que la couche de Kapton soit la surface exposée du matelas.

La présente porte également sur un procédé de protection thermique d'un engin spatial, comprenant un ensemble de parois externes à revêtir d'un matelas thermiquement isolant, le procédé comprenant :
- la détermination, en fonction d'une géométrie et d'une position opérationnelle prévue pour l'engin spatial, de parois externes de l'engin spatial ne devant pas produire de réflexion spéculaire,
- le revêtement desdites parois externes par un matelas dans lequel la couche externe est agencée de sorte que le film de seconde surface miroir SSM soit situé du côté de l'empilement de couches thermiquement isolantes, afin que pour ces parois la couche de Kapton soit la surface exposée du matelas, et
- le revêtement des autres parois par un matelas dans lequel la couche externe est agencée de sorte que la couche de polyimide soit située du côté de l'empilement de couches thermiquement isolantes, afin que pour ces parois la couche de seconde surface miroir SSM soit la surface exposée du matelas.

La présente a également pour objet l'utilisation d'un film de seconde surface miroir SSM assemblé à une couche de polyimide pour la réalisation d'une couche externe de matelas multicouches thermiquement isolant selon la description qui précède.

Le matelas multicouches présenté offre une bonne protection à l'oxygène atomique du fait de la présence de fluoroéthylène propylène (FEP) dans le film de seconde surface miroir ou SSM présent dans la couche externe. De plus, ce film SSM, par ses propriétés réfléchissantes des UVs, présente un échauffement réduit par rapport à une couche externe formée en tissu béta ou de Kapton classique.

En outre, le fait que le film SSM soit supporté par une couche de Kapton présente plusieurs avantages. D'une part, la présence d'une couche support en Kapton facilite l'installation du matelas sur une paroi de satellite, puisqu'à la différence du tissu Beta il n'est pas nécessaire de le coudre ; ce matelas peut être installé par des techniques classiques de rivetages et de collage par adhésif double-face, moyennant un pliage de la couche externe de manière à faire adhérer la couche de Kapton. La couche externe est également plus simple à manipuler et provoque moins de rebut lié à des déchirures.

D'autre part, la structure de la couche externe permet d'utiliser deux configurations de matelas ; dans la première, le film SSM est la surface apparente du matelas, la couche de Kapton étant du côté de la paroi, et dans ce cas il est possible de bénéficier des avantages thermiques conférés par les propriétés du SSM. Dans la deuxième configuration, la couche externe est retournée de sorte que la couche de Kapton soit exposée et le film SSM soit du côté de la paroi. Dans ce cas la protection contre l'oxygène atomique est toujours permise par le film SSM mais la couche de Kapton, moins réfléchissante que le SSM, est apparente. Cette configuration est particulièrement applicable pour des parois de l'engin spatial à revêtir ne devant pas générer produire de réflexion spéculaire.

### Brève description des dessins

D'autres caractéristiques, détails et avantages apparaîtront à la lecture de la description détaillée ci-après, et à l'analyse des dessins annexés, sur lesquels :
**Fig. 1a**

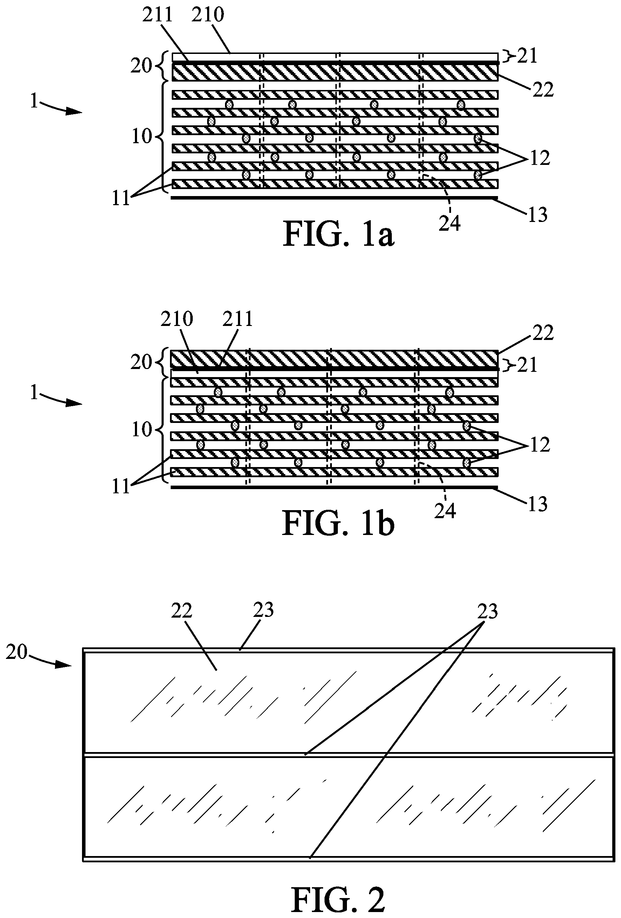

   [Fig. 1a] représente schématiquement une vue en coupe d'un matelas selon un mode de réalisation.
**Fig. 1b**
   [Fig. 1b] représente schématiquement une vue en coupe d'un matelas selon un autre mode de réalisation.
Fig. 2
   [Fig. 2] représente une couche externe d'un matelas selon un mode de réalisation vue au-dessus de la couche de polyimide.
Fig. 3

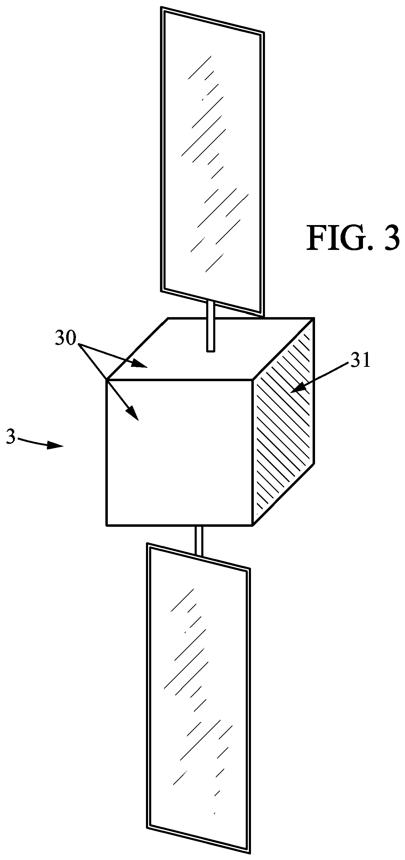

   [Fig. 3] représente schématiquement un satellite revêtu de matelas de protection thermique selon un mode de réalisation.
Fig. 4

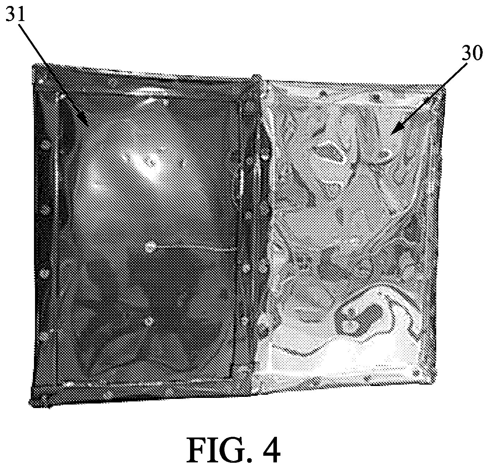

   [Fig. 4] est une photo de paroi d'engin spatial revêtues respectivement d'un matelas selon deux modes de réalisation différents.

### Description des modes de réalisation

En référence aux figures 1a et 1b, on va maintenant décrire un matelas 1 multicouches thermiquement isolant ou MLI, pour engin spatial, par exemple de type satellite ou sonde spatiale, et notamment adapté pour la protection thermique d'engins spatiaux en orbite terrestre basse ou LEO. Dans la suite, le terme « espace » désigne la partie de l'univers située à l'extérieur de tout engin spatial, et notamment à l'extérieur d'un engin spatial équipé du matelas 1 et en orbite terrestre basse. Le terme « externe » désigne la couche ou la surface d'un matelas exposée à l'espace lorsque le matelas est installé sur un engin spatial.

Le matelas 1 comprend un empilement 10 de couches 11 thermiquement isolantes superposées les unes aux autres, comprenant entre 5 et 30 feuilles 11 superposées. Chaque couche 11 peut être formée par exemple de polyimide ou Kapton (nom commercial utilisé dans la suite), d'une épaisseur pouvant être comprise entre 10 et 50 µm, éventuellement recouverte par un revêtement métallique (non représenté), par exemple en aluminium, pouvant présenter une épaisseur de quelques dixièmes de nanomètre à 1 nm. Ce revêtement métallique peut être obtenu par dépôt en phase gazeuse. Il permet de limiter les transferts thermiques d'une couche à l'autre par radiation infrarouge.

Les couches 11 thermiquement isolantes sont agencées dans l'empilement de manière à limiter des transferts thermiques par conduction d'une couche à l'autre. Par exemple, les couches 11 peuvent être séparées les unes des autres par un séparateur 12 interposé entre deux couches 11 consécutives et collé à celles-ci. le séparateur peut par exemple prendre la forme d'un filet alvéolé.

Le matelas 1 peut également comprendre une couche interne 13, destinée à être exposée entre la paroi de l'engin spatial et l'empilement 10. Cette couche interne peut être formée, de façon connue de l'Homme du Métier, de polyimide ou Kapton, ou par un film de PET connu sous le nom commercial de Mylar ou de Dacron.

Le matelas 1 comprend en outre une couche externe 20, superposée sur l'empilement 10, par exemple collée à l'une des couches 11 thermiquement isolante à l'extrémité de l'empilement 10. Cette couche externe 20 est destinée à être exposée à l'espace lorsque le matelas est installé sur une paroi d'un engin spatial, c'est-à-dire que l'empilement 10 de couches thermiquement isolantes 11 est alors disposé entre la couche externe 20 et la paroi de l'engin spatial sur laquelle le matelas 1 est fixé.

La couche externe 20 comprend un film 21 de seconde surface miroir ou SSM, acronyme anglais de Second Surface Mirror. Un tel film est formé d'une couche miroir métallique 211, typiquement en argent ou en inconel, disposée sous une couche 210 de fluoroéthylène propylène FEP ou Téflon-FEP, cette couche étant transparente, de sorte que des rayons lumineux incidents sur le film SSM passent au travers de la couche de Teflon-FEP et sont réfléchis sur la couche miroir 211, qui est donc la seconde surface rencontrée par les rayons lumineux.

Le film SSM peut présenter une épaisseur de l'ordre de 100 à 150 µm, par exemple comprise entre 120 et 130 µm. La couche 210 de fluoroéthylène propylène FEP présente une épaisseur de préférence supérieure ou égale à 50 µm, par exemple supérieure ou égale à 100 µm, par exemple comprise entre 100 et 130 µm. La couche miroir métallique présente quant à elle une épaisseur de l'ordre de 1.5 µm.

Les films SSM sont classiquement utilisés dans des radiateurs d'engins spatiaux car la couche de Téflon-FEP présente une bonne émissivité dans l'infrarouge, ce qui lui permet d'évacuer la chaleur d'un engin spatial.

Or, le film SSM présente également des propriétés intéressantes pour une utilisation en tant que couche externe de matelas de protection thermique, car il réfléchit les rayons UV, ce qui permet de limiter son échauffement quand il est exposé au soleil. Par ailleurs, la présence de fluoroéthylène propylène FEP sur la couche miroir assure une bonne résistance à l'oxygène atomique. L'épaisseur de la couche à utiliser dépend de la fluence d'oxygène atomique rencontrée par le satellite dans sa mission.

De plus, la couche externe 20 comprend une couche de Kapton ou polyimide 22, assemblée au film SSM, et plus précisément à la couche miroir 211 métallique, du côté de cette couche opposée à la couche en Téflon-FEP. Par exemple, la couche de polyimide 22 peut être collée à la couche miroir 211. Cette couche 22 peut présenter une épaisseur comprise entre 25 et 100 µm, par exemple d'environ 50 µm. Cette couche de Kapton 22 permet une manipulation plus aisée du matelas doté d'une telle couche externe, et sa fixation à des parois de satellites selon des procédés classiques, qui ne serait pas permise sans Kapton du fait de la présence du Teflon-FEP dans le film SSM 21. Notamment, la couche de Kapton permet d'assembler un matelas à un engin spatial par rivetage du matelas à la paroi, et par collage de matelas adjacents les uns aux autres au moyen de ruban adhésif, éventuellement double-face, apposé sur la couche de Kapton de chaque matelas. Pour cela, la couche externe 20 d'un matelas peut être repliée pour rendre accessible la couche 22 de Kapton.

De plus, la présence d'une couche 22 de polyimide ou Kapton permet d'utiliser deux configurations différentes pour le matelas 1 thermiquement isolant.

Une première configuration est représentée en figure 1a. Dans cette configuration, la couche externe 20 est disposée de sorte que la surface externe du matelas soit formée par le film SSM, et plus particulièrement par la couche 210 de Teflon-FEP de ce film. La couche 22 de Kapton supportant le film SSM est donc située du côté de l'empilement 10 des couches thermiquement isolantes, en étant comprise entre cet empilement 10 et le film SSM.

Dans cette configuration, le matelas 1 bénéficie des propriétés thermiques du film SSM et notamment du caractère réfléchissant du film SSM qui permet de réfléchir les UV et de maintenir la surface du matelas froide, c'est-à-dire n'excédant pas 10°C, quand elle est exposée au soleil. De plus, le Teflon du film SSM confère la protection contre l'oxygène atomique.

En revanche, cette configuration peut présenter des inconvénients sur certaines localisations d'un engin spatial du fait des réflexions spéculaires que peut engendrer le film SSM. En effet, si un engin spatial est intégralement recouvert du matelas 1 dans cette configuration, en fonction de la géométrie de l'engin, il peut exister un risque que certaines surfaces de l'engin spatial reçoivent deux fois le flux solaire, à savoir le flux provenant directement du soleil, et le flux réfléchi sur le film SSM du matelas 1 sur une autre surface de l'engin spatial.

La deuxième configuration, représentée sur la figure 1b, est avantageuse pour pallier cet inconvénient. Dans cette configuration, la couche externe 20 est disposée de sorte que la surface externe du matelas soit formée par la couche 22 de Kapton. Le film SSM est donc situé du côté de l'empilement 10 des couches thermiquement isolantes, c'est-à-dire entre l'empilement 10 et la couche 22 de Kapton. La solidarisation de la couche externe avec l'empilement 10 peut être faite d'une part par un bordurage périphérique, en repliant le bord de la couche externe et en l'assemblant à l'empilement par une bande adhésive, éventuellement double face. D'autre part, cette solidarisation est également assurée par l'ancrage du matelas au satellite au moyen de rivets traversant le matelas et répartis régulièrement sur la bordure du matelas.

Dans cette configuration, l'empilement 10 du matelas bénéficie également de la protection contre l'oxygène atmosphérique fournie par le Téflon du film SSM 21. De plus, c'est la couche 22 de Kapton qui forme la surface externe du matelas, tournée vers l'espace, et par conséquent le risque de réflexion spéculaire sur cette surface externe est évité. En revanche, cette configuration tend à chauffer davantage que la première configuration quand elle est exposée au soleil, et peut atteindre une température de l'ordre de 120°C.

Par conséquent, il est avantageux de concevoir la protection thermique d'un engin spatial en tenant compte de sa géométrie et de sa position opérationnelle prévue, pour déterminer les parois de l'engin spatial ne devant pas produire de réflexion spéculaire. La protection thermique de l'engin spatial peut ensuite être assurée en revêtant ces parois du matelas 1 dans la deuxième configuration décrite ci-avant où la surface externe du matelas est formée de la couche 22 de Kapton. Les autres parois sont quant à elles revêtues du matelas 1 dans la première configuration décrite ci-avant où la surface externe du matelas est formée du film SSM 21. En référence à la figure 3, on a représenté schématiquement un exemple de satellite 3 dont certaines parois 30 sont recouvertes du matelas 1 dans sa première configuration, et d'autres parois 31 sont recouvertes du matelas 1 dans sa deuxième configuration.

Sur la figure 4, une photographie représente également deux parois adjacentes d'un engin spatial, la paroi de gauche 30 étant revêtue d'un matelas dans sa deuxième configuration, l'apparence sombre du matelas correspondant à celle du polyimide ou Kapton, et la paroi de droite 31 étant revêtue d'un matelas dans sa première configuration, son apparence de miroir étant liée au film SSM.

Indépendamment de la configuration adoptée, en référence à la figure 2, qui représente schématiquement une couche externe 20 de matelas vue du côté de la couche 22 de Kapton, la couche externe 20 peut comprendre des zones 23 dépourvues de Kapton, c'est-à-dire des épargnes pratiquées dans la couche 22 de Kapton. Par exemple, les zones 23 dépourvues de Kapton peuvent comprendre une ou plusieurs bandes parallèles disposées sur au moins un bord, par exemple sur deux bords opposées du matelas, et une ou plusieurs bandes parallèles disposées à distance des bords du matelas. Ces bandes permettent de connecter la couche miroir métallique du film SSM à la masse de l'engin spatial sur lequel est monté le matelas, au moyen par exemple par un fil électrique, pour éviter que la couche métallique ne se charge électriquement dans l'espace à cause de l'exposition de l'engin spatial à des champs électromagnétiques et ne provoque des décharges électriques indésirées. En alternative (non représentée), la mise à la masse de la couche miroir métallique du film SSM peut être réalisée en retirant manuellement et localement des portions de la couche 210 de Teflon de manière à permettre l'accès, au niveau de ces portions, à la couche miroir. La couche externe 20 comporte alors des zones (non représentées) dépourvues de Teflon. Le matelas comporte également sur sa surface des perforations traversantes (représentées schématiquement par des pointillés 24 sur les figures 1a et 1b), et permettant l'évacuation de l'air pouvant être contenu entre deux couches thermiquement isolantes 11 de l'empilement 10 lors du lancement de l'engin spatial portant le matelas 1.

Il convient de noter que le Kapton et le Téflon-FEP présentent des coefficients de dilatation thermique différents et que leur utilisation dans une couche externe de matelas de protection thermique peut nécessiter des ajustements pour compenser ces différences. Notamment, l'Homme du Métier peut augmenter la densité de rivets utilisés, par rapport à des matelas de l'état de la technique, pour la fixation du matelas à une paroi de satellite, notamment sur les bords du matelas, afin de limiter des déformations induites sur le matelas par ces coefficients de dilatation thermiques différents. Des orifices prévus dans le matelas pour la fixation des rivets peuvent également être agrandis pour assurer un jeu compensant les déformations.

## Revendications

1. Matelas (1) multicouches thermiquement isolant pour engin spatial, comprenant :
- un empilement (10) d'une pluralité de couches (11) thermiquement isolantes, et
- une couche externe (20) superposée sur l'empilement (10),
**caractérisé en ce que** la couche externe (20) comprend
- un film (21) de seconde surface miroir SSM, comprenant une couche miroir (211) disposée sous une couche de fluoroéthylène propylène FEP (210), et
- une couche de polyimide (22) assemblée au film SSM (21).

2. Matelas (1) thermiquement isolant selon la revendication 1, dans lequel la couche de fluoroéthylène propylène FEP (210) présente une épaisseur supérieure à 50 µm.

3. Matelas (1) thermiquement isolant selon la revendication 1 ou 2, dans lequel la couche de polyimide (22) est collée à la couche miroir (211), du côté de la couche miroir opposé à la couche de FEP (210).

4. Matelas (1) thermiquement isolant selon la revendication 1 à 3, dans lequel la couche externe (20) est agencée de sorte que la couche de polyimide (22) soit située du côté de l'empilement (10) de couches thermiquement isolantes (11).

5. Matelas (1) thermiquement isolant selon la revendication 1 à 3, dans lequel la couche externe (20) est agencée de sorte que le film de seconde surface miroir SSM (21) soit situé du côté de l'empilement (10) de couches thermiquement isolantes (11).

6. Matelas (1) thermiquement isolant selon l'une des revendications précédentes, dans lequel la couche miroir (211) est métallique et la couche externe (20) comprend au moins une zone (23) dépourvue de polyimide pour permettre la mise à la masse de la couche miroir (211).

7. Matelas (1) thermiquement isolant selon l'une des revendications précédentes, dans lequel les couches (11) de l'empilement (10) sont formées en polyimide comportant un revêtement métallique.

8. Engin spatial (3), comprenant une protection thermique rapportée sur ses parois, **caractérisé en ce que** la protection thermique est formée du matelas (1) thermiquement isolant selon l'une des revendications précédentes.

9. Engin spatial (3) selon la revendication 8, dans lequel la protection thermique est formée :
- sur au moins une paroi (30) de l'engin spatial, du matelas selon la revendication 4 de sorte que la couche de seconde surface miroir SSM soit la surface exposée du matelas, et
- sur au moins une autre paroi (31) de l'engin spatial, du matelas selon la revendication 5 de sorte que la couche de polyimide soit la surface exposée du matelas.

10. Procédé de protection thermique d'un engin spatial, comprenant un ensemble de parois externes à revêtir d'un matelas (1) thermiquement isolant, le procédé comprenant :
- la détermination, en fonction d'une géométrie et d'une position opérationnelle prévue pour l'engin spatial, de parois externes (31) de l'engin spatial ne devant pas produire de réflexion spéculaire,
- le revêtement desdites parois externes (31) par un matelas (1) selon la revendication 5, de sorte que pour ces parois la couche de polyimide soit la surface exposée du matelas, et
- le revêtement des autres parois (30) par un matelas (1) selon la revendication 4, de sorte que pour ces parois la couche de seconde surface miroir SSM soit la surface exposée du matelas.

11. Utilisation d'un film de seconde surface miroir SSM (21) assemblé à une couche de polyimide (22) pour la réalisation d'une couche externe (20) de matelas (1) multicouches thermiquement isolant selon l'une des revendications 1 à 7.

## Patentansprüche

1. Thermisch isolierende mehrschichtige Decke (1) für ein Raumfahrzeug, aufweisend:
- einen Stapel (100) von mehreren thermisch isolierenden Schichten (11), und
- eine oberhalb des Stapels (10) angeordnete Außenschicht (20),
**dadurch gekennzeichnet, dass** die Außenschicht (20) aufweist:
- einen Second-Surface-Mirror, SSM, Belag (21), der eine Spiegelschicht (211) aufweist, die unterhalb einer Fluorethylenpropylen, FEP, Schicht (210) angeordnet ist, und
- eine Polyimid-Schicht (22), die mit den SSM-Belag (21) verbunden ist.

2. Thermisch isolierende Decke (1) nach Anspruch 1, in welcher die Fluorethylenpropylen, FEP, Schicht (210) eine Dicke von mehr als 50µm hat.

3. Thermisch isolierende Decke (1) nach Anspruch 1 oder 2, in welcher auf der der FEP-Schicht (210) entgegengesetzten Seite der Spiegelschicht die Polyimid-Schicht (22) an die Spiegelschicht (211) geklebt ist.

4. Thermisch isolierende Decke (1) nach Anspruch 1 bis 3, in welcher die Außenschicht (20) derart angeordnet ist, dass die Polyimid-Schicht (22) sich auf der Seite des Stapels (10) thermisch isolierender Schichten (11) befindet.

5. Thermisch isolierende Decke (1) nach Anspruch 1 bis 3, in welcher die Außenschicht (20) derart angeordnet ist, dass der SSM-Belag (21) sich auf der Seite des Stapels (10) thermisch isolierender Schichten (11) befindet.

6. Thermisch isolierende Decke (1) nach einem der vorstehenden Ansprüche, in welcher die Spiegelschicht (211) metallisch ist und die Außenschicht (20) mindestens eine Zone (23) frei von Polyimid aufweist, um eine Erdung der Spiegelschicht (211) zu erlauben.

7. Thermisch isolierende Decke (1) nach einem der vorstehenden Ansprüche, in welcher die Schichten (11) des Stapels (10) aus Polyimid mit einem metallischen Überzug gebildet sind.

8. Raumfahrzeug (3) aufweisend einen an seinen Wänden angebrachten thermischen Schutz, **dadurch gekennzeichnet, dass** der thermische Schutz aus der thermisch isolierenden Decke (1) nach einem der vorstehenden Ansprüche gebildet ist.

9. Raumfahrzeug (3) nach Anspruch 8, in welchem der thermische Schutz:
- an mindestens einer Wand (30) des Raumfahrzeugs von der Decke nach Anspruch 4 gebildet wird, so dass die Second-Surface-Mirror, SSM, Schicht die exponierte Oberfläche der Decke ist, und
- an mindestens einer anderen Wand (31) des Raumfahrzeugs von der Decke nach Anspruch 5 gebildet wird, so dass die Polyimid-Schicht die exponierte Oberfläche der Decke ist.

10. Verfahren zum thermischen Schutz eines Raumfahrzeugs, das mehrere Außenwände aufweist, die mit einer thermisch isolierenden Decke (1) zu verkleiden sind, wobei das Verfahren aufweist:
- das Bestimmen von Außenwänden (31) des Raumfahrzeugs, die keine Spiegelreflexion hervorrufen dürfen, als Funktion einer Geometrie und einer für das Raumfahrzeug vorgesehenen Betriebsposition,
- das Verkleiden der Außenwände (31) mit einer Decke (1) nach Anspruch 5, so dass für diese Wände die Polyimid-Schicht die exponierte Oberfläche der Decke ist, und
- das Verkleiden anderer Wände (30) mit einer Decke (1) nach Anspruch 4, so dass für diese Wände die Second-Surface-Mirror, SSM, Schicht die exponierte Oberfläche der Decke ist.

11. Verwendung eines einer Polyimid-Schicht (22) beigefügten SSM-Belags (21) für die Herstellung einer Außenschicht (22) einer thermisch isolierenden mehrschichten Decke (1) nach einem der Ansprüche 1 bis 7.

## Claims

1. Heat-insulating multi-layer blanket (1) for spacecraft, comprising:
- a stack (10) of a plurality of heat-insulating layers (11), and
- an external layer (20) superimposed on the stack (10),
**characterized in that** the external layer (20) comprises
- a second surface mirror SSM film (21), comprising a mirror layer (211) placed under a fluorinated ethylene propylene FEP layer (210), and
- a polyimide layer (22) joined to the SSM film (21).

2. Heat-insulating blanket (1) according to claim 1, wherein the fluorinated ethylene propylene FEP layer (210) has a thickness greater than 50 µm.

3. Heat-insulating blanket (1) according to claim 1 or 2, wherein the polyimide layer (22) is adhered to the mirror layer (211) on the side of the mirror layer that is opposite to the FEP layer (210).

4. Heat-insulating blanket (1) according to claim 1 to 3, wherein the external layer (20) is arranged so that the polyimide layer (22) is located on the side that is towards the stack (10) of heat-insulating layers (11).

5. Heat-insulating blanket (1) according to claim 1 to 3, wherein the external layer (20) is arranged so that the second surface mirror SSM film (21) is located on the side that is towards the stack (10) of heat-insulating layers (11).

6. Heat-insulating blanket (1) according to one of the preceding claims, wherein the mirror layer (210) is made of metal and the external layer (20) comprises at least one area (23) devoid of polyimide in order to allow grounding of the mirror layer (210).

7. Heat-insulating blanket (1) according to one of the preceding claims, wherein the layers (11) of the stack (10) are formed of polyimide comprising a metal coating.

8. Spacecraft (3) comprising thermal protection attached to its walls, **characterized in that** the thermal protection is formed of the heat-insulating blanket (1) according to one of the preceding claims.

9. Spacecraft (3) according to claim 8, wherein the thermal protection is formed:
- on at least one wall (30) of the spacecraft: of a blanket according to claim 4 such that the second surface mirror SSM layer is the exposed surface of the blanket, and
- on at least one other wall (31) of the spacecraft: of a blanket according to claim 5 such that the polyimide layer is the exposed surface of the blanket.

10. Method for the thermal protection of a spacecraft comprising a set of external walls to be covered with a heat-insulating blanket (1), the method comprising:
- the determination, according to a geometry and an operational position anticipated for the spacecraft, of external walls (31) of the spacecraft that should not produce specular reflection,
- the covering of said external walls (31) with a blanket (1) according to claim 5, such that the polyimide layer is the exposed surface of the blanket for these walls, and
- the covering of the other walls (30) with a blanket (1) according to claim 4, such that the second surface mirror SSM layer is the exposed surface of the blanket for these walls.

11. Use of a second surface mirror SSM film (21) joined to a polyimide layer (22) to create an external layer (20) of a heat-insulating multi-layer blanket (1) according to one of claims 1 to 7.
